(19) Europäisches Patentamt / European Patent Office / Office européen des brevets

(11) **EP 3 920 092 B1**

(12) **EUROPEAN PATENT SPECIFICATION**

(45) Date of publication and mention
of the grant of the patent:
**02.08.2023 Bulletin 2023/31**

(21) Application number: **21177550.7**

(22) Date of filing: **03.06.2021**

(51) International Patent Classification (IPC):
**G06V 20/52** *(2022.01)*

(52) Cooperative Patent Classification (CPC):
**H04N 7/188; G06V 20/53;** G06F 2218/10;
G08B 13/19613

(54) **SYSTEM AND METHOD FOR DETECTING A POSSIBLE HARASSMENT TO PEOPLE RESIDING IN INDOOR AREAS, IN PARTICULAR OF TRANSPORT RELATED NETWORKS**

SYSTEM UND VERFAHREN ZUR DETEKTION EINER MÖGLICHEN BELÄSTIGUNG VON PERSONEN, DIE SICH IN INNENRÄUMEN BEFINDEN, INSBESONDERE VON TRANSPORTBEZOGENEN NETZEN

SYSTÈME ET PROCÉDÉ POUR DÉTECTER UN POSSIBLE HARCÈLEMENT SUR DES PERSONNES RÉSIDANT DANS DES ZONES INTÉRIEURES, EN PARTICULIER DES RÉSEAUX ASSOCIÉS AU TRANSPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.06.2020 IN 202021023736**

(43) Date of publication of application:
**08.12.2021 Bulletin 2021/49**

(73) Proprietor: **ALSTOM Transport Technologies**
**93400 Saint-Ouen (FR)**

(72) Inventors:
• **NAGASUBRAMANIAM, Sankarnarayanan**
**411007 PUNE (IN)**
• **PATIL, Abhishek**
**580031 HUBLI (IN)**
• **NATARAJAN, Ashok**
**641006 COIMBATORE (IN)**
• **ANSARI, Maroofa-azmat-ullah**
**211004 ALLAHABAD (IN)**

(74) Representative: **Lavoix**
**2, place d'Estienne d'Orves**
**75441 Paris Cedex 09 (FR)**

(56) References cited:
**WO-A1-00/02391     KR-A- 20200 052 418**

• **RODRÍGUEZ-RODRÍGUEZ IGNACIO ET AL: "Towards a Holistic ICT Platform for Protecting Intimate Partner Violence Survivors Based on the IoT Paradigm", SYMMETRY, vol. 12, no. 1, 12 December 2019 (2019-12-12), pages 1-17, XP055849178, DOI: 10.3390/sym12010037 Retrieved from the Internet: URL:https://pdfs.semanticscholar.org/aff3/9eaaa080e3e78a412d5362e0c18ebc0515c6.pdf>**
• **NANDITA SHARMA ET AL: "Objective measures, sensors and computational techniques for stress recognition and classification: A survey", COMPUTER METHODS AND PROGRAMS IN BIOMEDICINE., vol. 108, no. 3, 23 August 2012 (2012-08-23), pages 1287-1301, XP055346538, NL ISSN: 0169-2607, DOI: 10.1016/j.cmpb.2012.07.003**

**Description**

The present invention concerns a system and a method for detecting a possible situation of harassment to people residing in indoor areas, in particular of transport related networks.

The system and method according to the present invention are particularly suitable for being used with passengers moving in and using a public transportation network, such as a railway convoy, be it a subway train or a main line train, or the like, and they will be described hereinafter by making direct reference to such application without intending in any way to limit their possible application to other environments.

The problem of harassment, such as a sexual harassment against women, covers a wide range of very offending and intolerable behaviours and is unfortunately still rather diffused notwithstanding the increasing attention of authorities and public trying to contrast it.

For example, the global statistics on women using public transport published by UITP and World Bank in January 2018, estimate that at least 20% of travelling people experience a harassment during a train journey.

It is very likely that such statistics even underestimate the real level of such problem. Indeed, in most cases victims are reluctant to report the harassment for various reasons, for example due to the difficulty of bringing sound evidences to authorities, the possibility of keeping as much as possible confidential own identity and personal data, due to the lack of confidence in proper intervention and handling by questioned authorities, et cetera.

KR 2020 0052418 A discloses a deep-learning-based automatic violence detection system which comprises: a video recording unit for storing control images recorded with a control target, e.g. a person; an image analysis unit for extracting an optical flow representing a difference between frames of the control images; an image classification unit for classifying the extracted optical flow into a deep learning network to detect a region suspected of violence in the optical flow; an image recognition unit for detecting an image of possible violence by recognizing an object or abnormal behavior that may be related to a violent act in the control image; and an image determination unit for determining the suspected violence region and the violence image to determine a violent situation and a normal situation. The image determination unit calculates a violence detection score using the suspected violence area and the violence image according to a predefined violence detection score table. Then, it determines whether a violence situation or a normal situation occurs based on the determined score. A data storage unit stores the corresponding control image and a log for the video recording time in a database when it is determined that a violent situation is identified.

The present invention is aimed at facing at least some of the above issues, and in particular at providing a solution allowing to detect a possible situation of harassment to people residing in an indoor area, timely, securely, and in a way that could support possible prosecutions against the harassment behavior.

This aim is achieved by a system and a method for detecting a possible situation of harassment to people residing in an indoor area, according to the appended set of claims.

Further characteristics and advantages will become apparent from the description of some preferred but not exclusive exemplary embodiments of a system and a method according to the invention, illustrated only by way of non-limitative examples with the accompanying drawings, wherein:

> Figure 1 is a block diagram schematically illustrating a system for detecting a possible situation of harassment to people residing in an indoor area, notably inside a train;
> Figure 2 is a flow chart schematically illustrating a method for detecting a possible situation of harassment to people residing in an indoor area, which can be implemented for example using the system of figure 1;
> Figure 3 is a block diagram schematically illustrating a detecting apparatus for detecting biometric and/or ambient data used in the system and method according to the present invention;
> Figure 4 is a flow chart schematically illustrating a possible way of calculating the respiration rate of a person which may be subject to harassment;
> Figure 5 is a diagram illustrating an exemplary use case for controlling the secure flow of the generated data via a dynamic changeable behaviour;
> Figure 6 illustrates a computation model for computing a stress coefficient used in the system and method according to the present invention.

It should be noted that in the detailed description that follows, identical or similar components, either from a structural and/or functional point of view, have the same reference numerals, regardless of whether they are shown in different embodiments of the present disclosure.

It should be also noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning.

In particular, for electronic and/or software means, each of the above listed terms means and encompasses electronic circuits or parts thereof, as well as stored, embedded or running software codes and/or routines, algorithms, or complete programs such as Apps, suitably designed for achieving the technical result and/or the functional performances for which such means are devised.

In the following description, various acronyms or abbreviations will be used for the sake of conciseness and are hereby summarized together with their intended meaning for direct reference:

- the expression "BT" or "BLE" refers to communications using bluetooth protocol.
- the expression "IoT" means "Internet of Things";
- the expression "Feather Weight TPM & Transport Engine " refers to a Custom "Trusted Platform Module", namely a custom hardware used for authentication and securing data;
- the expression "Bayes" refers to the Naive Bayes Machine Learning approach which is a Bayesian classification algorithm;
- the expression "SVM" refers to the machine learning approach for a Support Vector Machine, which is a discriminative classifier formally characterized by an isolating hyperplane;
- the expression "neural model" refers to the machine learning approach for neural networks with high number of features;
- the expression "SIP" refers to the Session Initiation Protocol defined by RFC 3261 and IP Multimedia standards;
- the expression "Registrar" refers to the functionality of a "SIP Registrar" as defined by the SIP and IP Multimedia standards;
- the expression "SCF" refers to the functionality of a Session Control Functionality as defined in the SIP and IP Multimedia standards;
- the expression "P-CSCF" refers to the functionality of a Proxy-CSCF which is a SIP proxy that acts as the first point of contact for the SIP end points;
- the expression "S-CSCF" refers to the functionality that facilitates a SIP session setup and teardown;
- the expression "GSM" refers to the Global System for Mobile communication standards;
- the expression "GSM-R" refers to the standard that defines the use of GSM as a network for rail transport infrastructure operators;
- the expression "TETRA" refers to the standard that defines the use of TETRA as a network for rail transport infrastructure operators;
- the expression "4G" refers to the wireless communications standard developed by the 3$^{rd}$ Generation Partnership Project (3GPP) and is commonly referred to as LTE(Long Term Evolution-4G;
- the expression "5G" refers to the next generation of mobile broadband;
- the expression "NG-RAN" refers to the Next Generation Radio Access Network and is part of the 3GPP 5G Next Generation System;
- the expression "gNB" refers to the Next Generation Node B which is the base station that facilities the 5G radio techniques;
- the expression "PDN Gateway" refers to Packet Data Network Gateway and is the point of interconnection between the Evolved Packet Core and the external IP networks;
- the expression "NVR" refers to Network video recorders used for storing videos;
- the expression "RTSP" refers to the Real Time Streaming Protocol (RTSP) which is a network control protocol designed to control media streaming sessions;
- the expression "ONVIF" refers to the open industry forum defined protocol for the interface of physical IP-based security products.

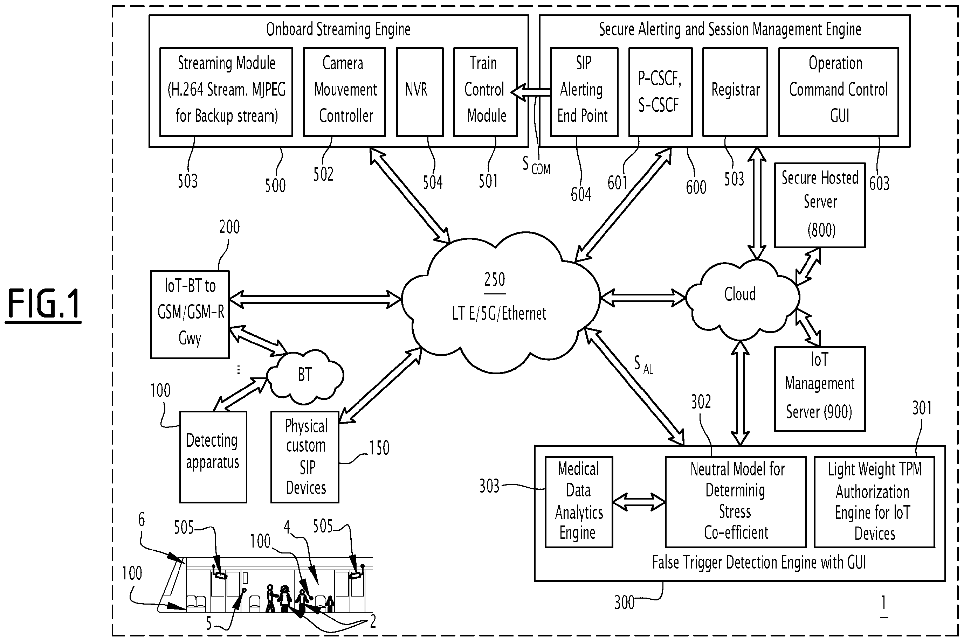

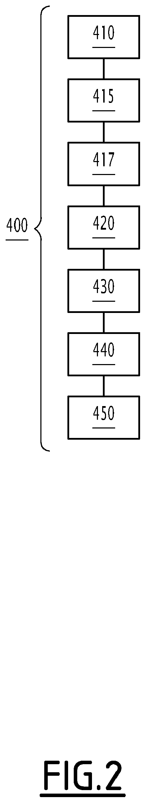

Figures 1 and 2 schematically illustrate a system 1 and a respective method 400 for detecting a possible situation of harassment to people 2 residing in an indoor area 4, for example inside a train indicated in figure 1 by the overall reference number 6.

With the term "residing" or "situated" or "located" it is hereby meant to refer to a person 2 moving or still, for example sitting or standing, in the relevant indoor area 4, and the term "harassment" includes any possible type of harassment misconduct that can be committed against people in such indoor areas 4, be it sexual, bullying, et cetera.

As illustrated in figure 1, the system 1 according to the invention comprises at least:

- a detecting apparatus , indicated by the overall reference number 100, which is configured to detect at least biometric data relative to at least one person 2 located in the indoor area 4, namely inside the train 6;
- a data elaboration system, indicated by the overall reference number 300, which is configured to calculate, based on at least the biometric data received from the detecting apparatus 100, a parameter indicative of a possible situation of harassment to said person 2, and to generate an alarm signal $S_{AL}$ if the calculated parameter exceeds a predetermined threshold; and

- a control system 500, 600 which is configured, upon receiving the alarm signal $S_{AL}$, first to localize the position of the person 2 inside the indoor area 4, and then to start recording evidence of the possible situation of harassment which may be suffered by that person 2.

In the embodiment illustrated in figure 1, the control system comprises for example an electronic control unit 600, which can be located remotely from the train 6, and hereinafter is referred to also as a "secure alerting and session management engine 600" or simply the "engine 600", and a video control system 500, hereinafter also referred to as a "streaming engine 500", which can be installed for example on board of the train 6.

In particular, the video control system 500 comprises at least one controllable video capturing device 505 installed inside the indoor area 4, for example one or more video cameras installed inside the train 6, that can be oriented to selectively capture one or more images where a person 2 has been identified as being subject to a possible harassment.

The electronic control unit 600 is configured, upon receiving the alarm signal $S_{AL}$ from the data elaboration system 300, to output a corresponding command signal $S_{COM}$ to the video control system 500, and in particular to a train control module 501 and to a movement controller 502 which controls the movement of the video capturing device(s), namely the one or more video cameras 505, and cause at least one video capturing device 505 to be oriented towards the position of the person 2 inside the indoor area 4, and then to start recording image evidence of the possible situation of harassment to said person 2.

In practice, the movement controller 502, upon receiving the command signal $S_{COM}$, first extracts the location information of the sources, including their relative position, which sent the relevant data indicative of a possible condition of harassment, and then commands the video capturing device(s) 505 to be properly oriented and to start recording images. The control of the movement of the device(s) 505 can be exercised either through a custom ONVIF profile based mechanism, or through a proprietary control mechanism to enhance the ability to change and focus in the required spot. The streaming output generated through the RTSP session via the streaming module 503 is then stored, for example using a Network Video Recorder (NVR) 504, and is also sent for instance to an operation command control graphical user interface (GUI) 603. The GUI 603 enables an operator, for example a railway operator, to have a view of the situation. Upon seeing the content in the computerized engine 600, the operator can have a choice to initiate further actions.

Furthermore, the system 1 according to the invention can comprise an explicit alerting mechanism; for example, as illustrated in figure 1, the alerting mechanism can be realized using one or more small foot print physical custom SIP Devices 150. These devices enable sending some train related attributes along with an alert invocation through custom additions to the usual SIP informing method, which are handled through the P-CSCF proxy 601 by the SIP alerting end point 604.

According to a possible embodiment, the detecting apparatus 100 is configured to detect also ambient data indicative of one or more actual ambient conditions of the indoor area 4.

According to a possible embodiment, the data elaboration system 300 comprises a neural-based module 302, including in particular a Bayes/SVM/neural model, which is configured to calculate the parameter indicative of a possible situation of harassment to the person 2 based on the biometric data relative to such person 2 and on the ambient data received from the detecting apparatus 100.

According to a possible embodiment, and as it will be described more in details further ahead in the present disclosure, the neural-based model 302 calculates, as a parameter indicative of a possible situation of harassment, a reference index which will be referred to hereinafter as a "stress coefficient".

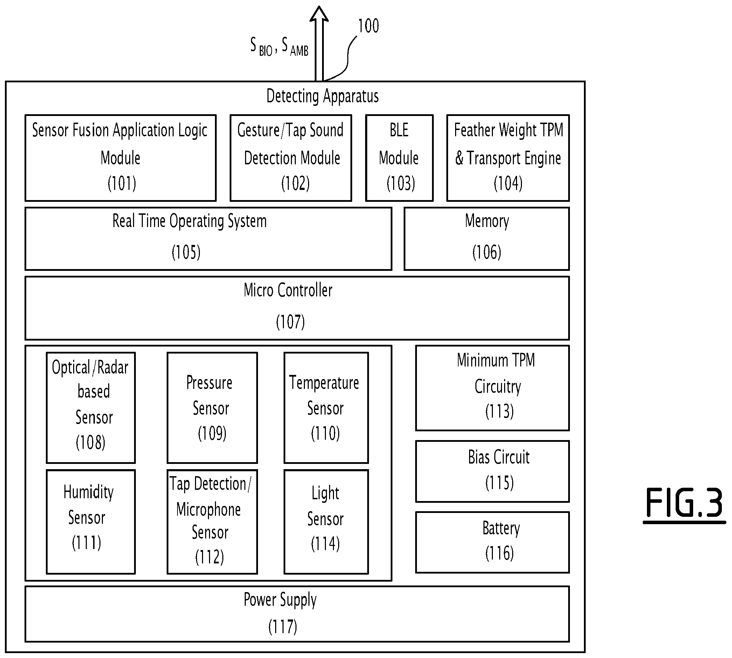

According to a possible embodiment of the system 1, the detecting apparatus 100 comprises at least one biometric data detecting device, indicated in figure 3 by the reference number 108, which is configured for example to detect data indicative of a respiration rate of a person 2, and then to transmit corresponding first signals $S_{BIO}$ containing said data indicative of a respiration rate to the data elaboration system 300.

The biometric data detecting device 108 comprises a radar-based sensor. In an alternative embodiment not according to the claimed invention, the biometric data detecting device 108 comprises another type of non-intrusive and/or contactless device, such as an optical sensor.

For instance, the radar-based sensor 108 can generate the respiration rate without involvement of any physical contact, in particular with the chest of the relevant person; in particular, the reflected radar signal is amplitude modulated by the chest movement of the breathing person 2. Upon analysing the variance of a range bin amplitude through time, the presence of a moving target can be detected and it is also possible to estimate the distance from the radar sensor 108. The radar sensor 108 that generates the biometric data has the ability to penetrate through an obstacle, like clothing, and the target person 2 can be precisely located thanks to a very high downrange resolution. A larger bandwidth used makes it possible to better separate and resolve multiple targets and clutters.

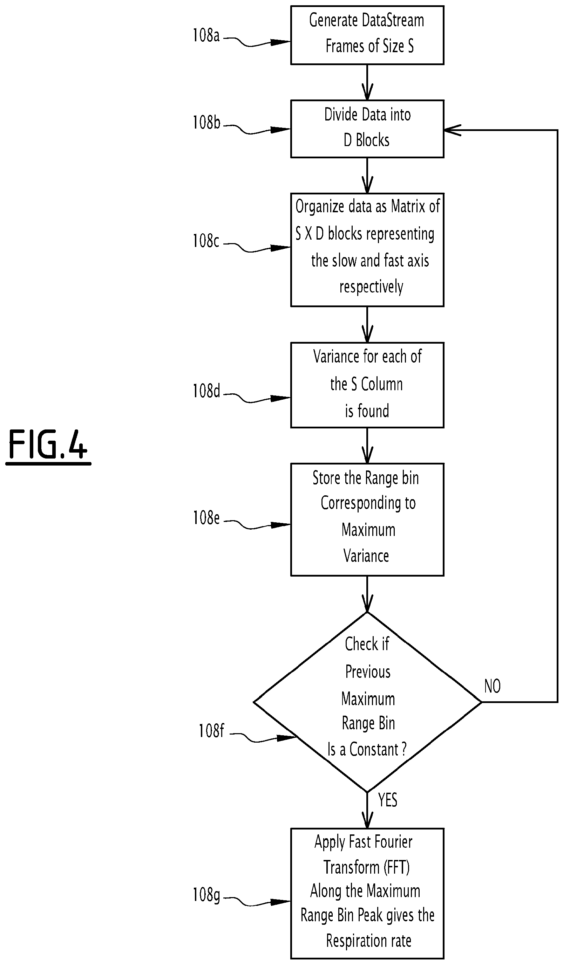

An exemplary procedure for deriving the respiration rate is depicted in figure 4. Briefly, as illustrated, in a first phase 108a datastream frames of size S are generated; then at phase 108b the data generated are divided into D blocks, further (phase 108c) data are organized in a form of a matrix of SxD blocks representing the slow and fast axis respectively.

At phase 108d the variance for each of the S column is found, and then (phase 108e) the range bin corresponding to the maximum variance is stored. Further (phase 108f), it is checked if the previous maximum range bin is a constant; in the negative case, the procedure repeats the calculation procedure from the phase 108b; in the positive case, a Fast Fourier Transformation is applied (phase 108g) along the maximum range bin and the peak gives the respiration rate.

According to a possible embodiment of the system 1, the detecting apparatus 100 comprises at least one, preferably a plurality of, ambient data detecting devices for detecting ambient data relative to the indoor area 4 which can influence the behavior of human beings.

The or each of the ambient data detecting device(s) is/are configured to detect each respective ambient data selected from the group comprising data indicative of the actual pressure, the actual temperature, the actual humidity, the actual light inside the indoor area 4, and then to transmit to the data elaboration system 300 corresponding second signals $S_{AMB}$ containing the respective actual ambient data detected.

Usefully, as illustrated in the exemplary embodiment of figure 3, the detecting apparatus 100 comprises a pressure sensor 109 for detecting the pressure inside the indoor area 4, a temperature sensor 110 for detecting the temperature inside the indoor area 4, a humidity sensor 111 for detecting the humidity inside the indoor area 4, and a light sensor 114 for detecting the light intensity inside the indoor area 4.

For instance, the light intensity is a factor which can influence the behavioural aspect of human beings relative to harassment; a higher wavelength light is less disruptive than other light wavelengths. Hence, the intensity of three different colours such as red, green and blue along with white are also determined, and the information collected by the relevant sensor is transmitted to the Bayes/SVM/Neural Model 302 for determining the stress coefficient. Similarly, the effect of the ambient temperature, pressure, relative humidity is also transmitted to and is analysed by the Neural Model for determining the stress coefficient.

As those skilled in the art would easily appreciate, the detecting apparatus 100 can comprise a plurality of separate devices, or it can be constituted by a single device incorporating all biometric and ambient data detecting sensors.

In the example illustrated in figure 3, the detecting apparatus 100 is represented as constituted by a stand-alone single device comprising, in addition to the various sensors mentioned, a power supply unit 117, a battery 116, a bias circuit 115, a minimum TPM circuitry module 113, a micro controller 107, a real time operating system 105, a memory 106, a sensor fusion application logic module 101, a wireless communications module or interface, hereinafter referred to as a BLE or Bluetooth interface module 103, and a data encryption module 104 also referred to as a "Feather Weight TPM and transport engine 104" or simply the "engine 104".

Alternatively, if several independent devices are used, each of such devices can comprise one or more of the various data detecting sensors 108, 109, 110, 111, 114, and all the other components above listed.

Further, in the exemplary embodiment illustrated in figure 3, the stand-alone device 100 comprises a tap/gesture detection and/or microphone sensor 112, and an associated gesture/tap and/or sound detection module 102; also the sensor 112 and the module 102 can be incorporated into each device if several devices are used. The tap/gesture detection and/or microphone sensor 112 and the associated module 102 facilitate receiving of a gesture/sound based trigger signal that could also be outputted for proper actions, e.g. collection of evidence. Additionally or alternatively, custom signalling mechanisms, schematically indicated by the reference number 5, can be deployed inside the indoor area 4 for triggering the evidence collection process by facilitating an optimum encryption mechanism for all types of small foot print devices 100,150 or IoT devices thereby overcoming the limitation of high computing needs required for the transmitting devices and the corresponding receiving entities.

Usefully, the or each device 100 can be installed inside the train 6 at appropriate locations, and/or they can assume the form of wearable or portable devices worn by people.

Conveniently, in one embodiment of the system 1 according to the present invention, the detecting apparatus 100 is constituted by or comprises a portable or wearable device 100.

In the exemplary embodiment schematically illustrated in figure 1, the detecting apparatus 100 comprises a combination of one data detecting device 100 worn by a person 2, and other data detecting devices 100 installed inside the train 6.

Each device 100 can be a small unobtrusive, non-invasive small foot print device or an IoT device.

In practice, the engine 300, upon receiving the biometric and ambient data, starts processing the relevant data by applying machine-learning techniques in order to calculate the stress coefficient. Additionally, it may be noted that the medical world has seen correlations between stress and vital parameters, and in order to make the assessment more effective, ambient parameters also give an indirect view of the stress levels. Therefore, through a fusion of all the parameters measured, an heart rate variability aspect that refers to the beat to beat alterations in the heart rate is also derived with the help of a medical data analytics engine 303 which stores relevant parameters of respiration rates, light intensity, temperature, humidity and pressure received from the various sensors.

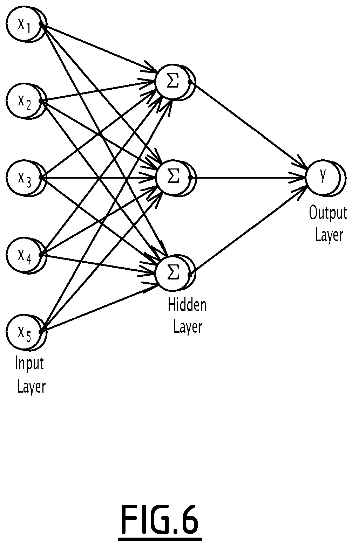

The procedure for determining the stress coefficient is for example as follows. The data received are split, through cross-validation, into training and validation sets. The module 302 is a neural network (NN) loosely modelled based on the neuronal structure of the mammalian cerebral cortex, but on much smaller scales. The structures have 3 layers, an input layer, a hidden layer and an output layer. As illustrated in figure 6, the input layer consists of five neurons (nodes) corresponding to the five features as x1, x2, x3, x4 and x5. The input layer and the bias are connected to the nodes of the hidden layer, and the nodes of the hidden layers are connected to the output node. The output node gives the stress coefficient. The connections are weighted, namely each of the connections are predefined with a weight. The goal of the training is to update this weight value to decrease the loss. When a signal (value) arrives, it gets multiplied by a weight value. For example, if a neuron has 4 inputs, it has 4 weight values which can be adjusted during training time. The mathematical representation for computation is for example represented by the following equations.

$$Y = \sum (weight * input) + bias$$

$$z = x_1 * w_1 + x_2 * w_2 + \ldots\ldots + x_n * w_n + b * 1$$

$$\hat{y} = a_{out} = sigmoid(z)$$

$$sigmoid(z) = \frac{1}{1 + e^{-z}}$$

The key components of the NN model are also the bias and the activation function. The bias is an extra input to the neurons and it is always 1, and has its own connection weight. The bias makes sure that even when all the inputs are zero (all 0's), there is still an activation in the neurons. The activation function on the other hand is used to introduce a non-linearity to neural networks. After forward propagation, it is possible to get an output value which is the predicted value. To calculate the error, the predicted value is compared with the actual output value. A loss function is used to calculate the error value. The derivative (gradients) of the error value is calculated with respect to each and every weight in the neural network. The gradient value is subtracted from the weight value to reduce the error value and to update the weights during the process of backward propagation. The process keeps repeating until the local minima are reached and the process is referred to as the gradient descent; overfitting is reduced by normalization by adding an additional term to the loss. As a final step, the output value is also passed through a binary classifier to classify the stress coefficient as "stress generated" or "no stress generated". The stress coefficient can be modelled also as a binary output, or as a calibrated value between 0 to 100%, thereby providing the flexibility to generate evidence even for a low minimum score.

Usefully, in the system 1 according to the invention, the data encryption module 104 is configured to encrypt dynamically at least part of the actual biometric data and/or of the one or more actual ambient transmitted, to be transmitted to the data elaboration system 300.

More in particular, the data encryption module 104 is configured to encrypt dynamically the at least part of the actual biometric data and of the one or more actual ambient data by modifying one or more encryption parameters.

Usefully, the wireless communication module or BLE module 103 is configured to transmit the first signals $S_{BIO}$ or the respective second signals $S_{AMB}$ (or a combination thereof) to the data elaboration system 300 through a communications networks comprising, for example, a TETRA/5G-GSM/GSM-R gateway 200, hereinafter also referred to as the gateway 200, and a transmission network 250, with a transmission priority level pre-assigned to the respective type of data to be transmitted.

The battery 116 and the bias circuit 115 enable a proper power management and the minimum TPM circuitry 113 which also provides specific functionalities concerning storage of important cyber data, for instance the TPM circuitry 113 enables storing of keys, tokens, and facilitates generation of random numbers. It may also be noted that the cyber data in the minimum TPM circuitry 113 is exposed only through the engine 104.

In turn, the real time operating system 105 and the memory module 106 facilitate the hosting and running of the various software modules with the entire device supporting a wide range of supply through the power supply unit 117. It has to be noted that the general power consumption is kept as low as possible for portable devices powered by the battery supporting operation modes, such as active mode and idle mode that enable low power consumption.

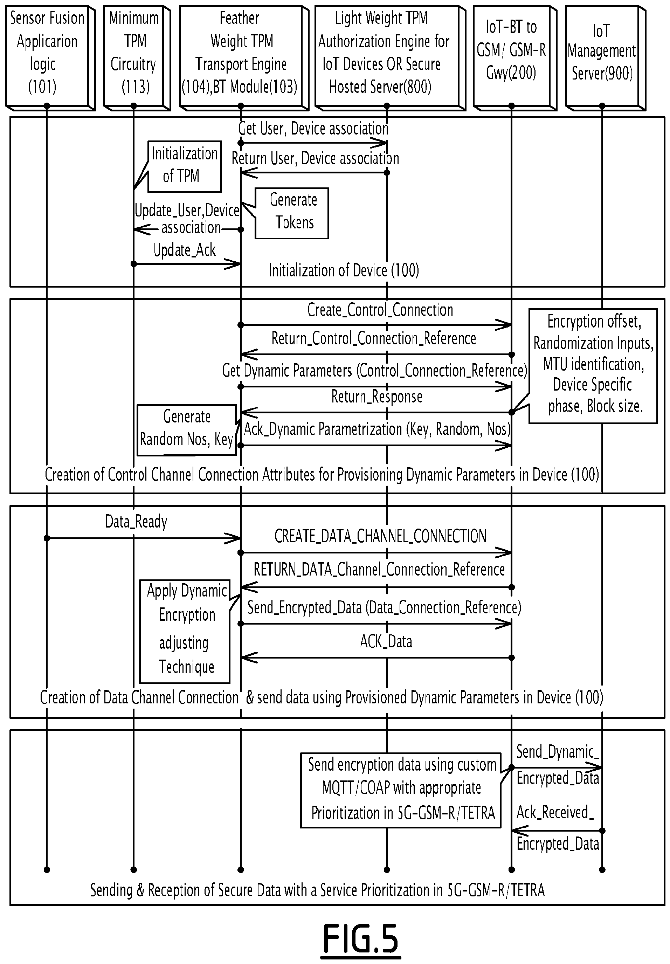

In practice, taking also into account the requirement of minimum foot print, low energy, and less demanding computing power, as a part of initialization, the engine 104 requests and gets from an external secured server, such as the secure hosted server 800, or from the light Weight TPM authorization engine 301, a user identity and a device identifier. The secured server 800 may be provided by an application provider or can be hosted by a transport operator, such as a railway operator. Based on the receipt of the identifiers, the Feather Weight TPM and transport engine 104 generates appropriate tokens. The minimum TPM circuitry 113 is used for storing the applicable part of user and device associations. In order to implement the sensor fusion application logic included in the module 101, the microcontroller 107 uses the memory/data storage 106 through multiple hardware interfaces to integrate the different sensors together and the processing capabilities. The sensor fusion application logic 101 combines the received data and passes it on to the engine 104 which, in conjunction with the BLE module 103, sends the data to the false trigger detection engine 300, and in particular to a medical data analytics engine 303 thereof. Such data are sent, preferably through customized communication methods, using the gateway 200. In particular, it has to be noted that the or each device 100 starts an interaction through the engine 104 with the gateway 200 for getting provisioned on key parameters for dynamic encryption. It has also to be noted that the engine 104 starts a control channel interaction with the communications gateway 200 through the BLE module 103 leveraging the tweaked RFCOMM connection model for getting the key parameters for dynamic encryption. While establishing the control channel, the or each device 100 uses specific additions to the BT profile to distinctly indicate that certain dynamic parameters can be changed during special procedures of interaction through the control channel interaction performed by the BLE module 103 in the stack. The following are for example the key dynamic parameters that are expected to be received by the device 100 through the RFCOMM stack in the BLE module 103: the supported MTU size in the communications network; the number of random numbers to be generated; the encryption offset that needs to be applied; the block size that needs to be considered for sending the data; a device specific phrase reference for key generations. The detailed interactions between the engine 104 of each device 100 and the gateway 200 is illustrated in further details through a simplified interactive use case diagram as depicted in figure 5.

The interactions can be understood by referring to the four blocks as can be observed in figure 5. The first block brings out the initialization steps for the device 100. The second block details the steps leading to creation of a control channel for provisioning the devices with dynamic parameters that would be used for encryption between the device 100 and the gateway 200. The provisioned parameters using the control channel are then used for actually transmitting the data from the device 100 to the gateway 100 through a separate data channel as can be observed in the third block depicted in figure 5. The principle of applying the dynamic parameters after the control channel interaction and the way data is sent is explained hereinafter using illustrative examples.

The device specific phrase reference received as a part of the dynamic provisioning parameter is also used for generating the key. When the sensor fusion application logic 101 is ready with the data, the principle involves sending X (for example 64 bits) blocks of data and with keys of either Y bits (for example 80 or 128 bits) for encryption and decryption. Basically, according to a possible embodiment, the engine 104 in each device 100 controls the block sizes to encrypt the desired part of the data, the position of the bytes to be encrypted, offset of the encryption length, and randomization. The dynamic control of encryption helps in choosing the extent of encryption required based on the nature of the value added service offered by the specific devices. As an example, it is assumed that a device 100 inside the train 6 has to to send for example 30 KB (30Xx1024=30720 bytes) of biometric and ambient data once the processing from the fusion logic 101 is completed, and that the model is configured as follows through the control channel interaction by the device: number of random numbers generated equals to 100 numbers; offset length equals to 100 bytes, block size equals to 30 KB. Before each time the engine 104 along with the BLE module 103 tries to transmit the data of 30720 bytes length as a packet, this data will have 100 distributed random numbers, for instance for bytes 1 to 30720. Basically, the size of the packet will be mapped to the data packet, and for each random number, for example the 6th byte to the offset length, i.e. 100 bytes, will get encrypted. So, in all the above parameters there will be a distributed encryption of 10000 bytes, which is approximately 30% of the data that is expected to be sent through the user data connection.

Hence, apart from other obvious benefits, the dynamic encryption ensures that the usage of a CPU is optimized and also saves the CPU consumption time further required for encrypting and decrypting the data. Thus, the engine 104 while leveraging common encryption and decryption mechanisms effectively, more importantly it dynamically controls the block sizes of the encryption, position of the bytes to be encrypted, offset of the encryption length, and randomization of the encryption. Further, a checksum is also added as a part of the secure payload, thereby making it more robust with regard to detection of data corruption. Furthermore, it has to be noted that the MTU size input received from the gateway 200 along with the need to overcome the link layer fragmentation, can be ensured with the random number generation in such a manner that it is less than the supported MTU bytes, thereby helping in optimizing the block size and avoiding fragmentation.

Additionally, it has to be noted that the extent of encryption required can be decided between each device 100 and the gateway 200, and in particular based on the MTU in the communications network, a suitable value of the parameters can be negotiated. Furthermore, it is important to note that the device 100 and the gateway 200 can exchange the parameters, either at the initial handshake or dynamically based on specific handshake messages between them.

It is also important to observe that changing the attributes of encryption through the control channel interaction at run time helps to flexibly manage the bandwidth as required for all different types of devices and associated value added services which may be present and used inside the train 6, and also it brings robustness of transit data since key attributes of encryption can be changed.

As an additional flexibility, it may also be noted that each device 100 can change the dynamic parameters above mentioned also periodically or at specific instances, partially or fully; in this way, the dynamic behaviour of packet transmissions can be changed, thus rendering more difficult to decipher the content without the knowledge of distributed percentage of encryption, offset length, number of random numbers, and in the end increasing the safety of transmission.

Usefully, another aspect is the possibility of adding specific attributes of priority as transmitted by each device 100 to the gateway 200 through the RFCOMM stack of the Bluetooth module 103. This prioritization reference can be observed by referring to the fourth block depicted in Figure 5. For example, many kinds of IoT applications/Services will have varied different requirements in terms of the service levels required. As a prerequisite, priorities can be set for the devices which generate value added services data through a provisioning mechanism. Provisioning is facilitated through the use of GUI/provisioning interfaces which can be provided by the gateway 200 and/or through external systems, such as an IoT management server, indicated in figure 1 by the reference number 900, that are capable of interacting with the devices 100 and other similar devices installed on board and aimed at providing other services.

For example, depending on the type and criticality of services that the various devices installed or present on board can provided via the data transmitted, a categorization and prioritization may be defined and assigned to each of them. For example, an emergency device can be assigned with the highest prioritization, the device(s) 100 used in the system 1 according to the invention can be assigned with a second priority level, and devices aimed at providing data related to maintenance services can be assigned with the lowest priority. Hence, this prioritization information is enhanced in the profile of the Bluetooth module 103 of each device 100 and gets adapted accordingly in the gateway 200. In this way, the UIC (International Union of Railways or the Union Internationale des Chemins de Fer) spectrum gets used for high priority operational applications and at the same time shared/public spectrum gets used for lower priority applications. These priorities can be provisioned as a part of initialization. The prioritization levels can be adapted for example for a 5G network in such a manner that the resource allocation is effectively used in both the 5G NG RAN and the 5G Network core using the other elements, such as the PDN Gateway and PCRF that control the network for effective delivery of the agreed quality of service.

Figure 2 illustrates a method 400 for detecting a possible situation of harassment to people in an indoor area 4, which comprises at least the following steps:

- 410: detecting, for example by means of the detecting sensor 108, at least biometric data relative to at least one person 2 located in the indoor area 4;
- 420: calculating, for example by means of the above indicated engine 300, based on at least the biometric data detected, a parameter indicative of a possible situation of harassment to said person 2;
- 430: generating an alarm signal if the calculated parameter exceeds a predetermined threshold; and, for example by means of the control system 500, 600 above described,
- 440: localizing the position of said person 2 inside the indoor area 4; and
- 450: starting recordal of evidence of the possible situation harassment, which may be suffered by said person 2.

The method 400 can implement in terms of steps/phases all functionalities previously described in connection with the system 1 which are not replicated hereby for the sake of conciseness.

For example, in one embodiment, the step of detecting 420 comprising detecting ambient data which can be also used for calculating the stress coefficient as previously described; data transmitted can be properly and dynamically encrypted in a step 415; and a data can be transmitted according to a preassigned priority level (step 417).

Hence, it is evident that the system 1 and method 400 according to the invention achieve the intended aim since they allow detecting a possible situation of harassment to people residing in an indoor area timely and with the possibility of collecting almost immediately a supporting evidence. Further, via the described dynamic encryption, data are transmitted in a very safe way; finally, the capability of the transmission network used is properly exploited and coordinated in conjunction with data transmitted by other devices which may be present in the same area for providing other services. Additionally, it has to be noted that based on the various parts of the system 1, including in particular the medical data analytics engine 303, other value added services, such as medical care may also be provided, for example during the train journey. As an extension of such services, the data could be sent to an external cloud using the optimum dynamically changeable secure data mechanism previously described, thereby also ensuring ground support availability if needed based on the biometric data.

The system 1 and method 400 thus conceived are susceptible of modifications and variations, all of which are within the scope of the inventive concept as defined in particular by the appended claims; for example, some parts of the control system 1 or any part thereof may reside on a centralized room, or may distributed in different parts, or may be incorporated into a unit/part different from the one(s) described; the various computerized engines/elaboration units may comprise one or more processors or they can be realized as processor-based devices or controllers, which can be of any suitable and commercially available type, and can comprise suitable electronics circuitry and/or suitable software.

All the details may furthermore be replaced with technically equivalent elements.

**Claims**

1.  A system (1) for detecting a possible situation of harassment to people in an indoor area (4), wherein it comprises at least:

    - a data elaboration system (300);
    - a detecting apparatus (100) configured to detect at least biometric data relative to at least one person (2) located in the indoor area (4), wherein said detecting apparatus (100) comprises at least a radar sensor (108) which is configured to detect biometric data indicative of a respiration rate of said person (2) and then to transmit corresponding first signals containing said biometric data indicative of a respiration rate of said person (2) to said data elaboration system (300); wherein
    - said data elaboration system (300) is configured to calculate, based on at least the biometric data received from the radar sensor (108) indicative of a respiration rate of said person (2), a parameter indicative of a possible situation of harassment to said person (2), and to generate an alarm signal if the calculated parameter exceeds a predetermined threshold;
    - a control system (500, 600) which is configured, upon receiving said alarm signal, first to localize the position of said person (2) inside the indoor area (4), and then to start recording video evidence of the possible situation of harassment to said person (2).

2.  The system (1) as in claim 1, wherein said detecting apparatus (100) is configured to detect also ambient data indicative of one or more actual ambient conditions of the indoor area (4).

3.  The system (1) as in claim 2, wherein said data elaboration system (300) comprises a neural-based module (302) which is configured to calculate said parameter indicative of a possible situation of harassment to said person (2) based on the biometric data relative to said person (2) and on the ambient data received from the detecting apparatus (100).

4.  The system (1) as in claim 1, wherein said detecting apparatus (100) comprises one or more ambient data detecting devices (109, 110, 111, 114) which are configured to detect each respective ambient data selected from the group comprising data indicative of the actual pressure, the actual temperature, the actual humidity, the actual light inside the indoor area (4), and then to transmit to the data elaboration system (300) each corresponding second signals containing the respective actual ambient data detected.

5.  The system (100) as in claim 4, wherein the detecting apparatus (100) comprises a data encryption module (104) which is configured to encrypt dynamically at least part of at least one of the actual biometric data and the one or more actual ambient transmitted via the first signals or the respective second signals to the data elaboration system (300).

6.  The system (1) as in any one of the preceding claims, wherein said detecting apparatus (100) comprises a non-invasive portable or wearable device (100).

7.  The system (1) as in claim 5, wherein said data encryption module (104) is configured to encrypt dynamically said at least part of at least one of the actual biometric data and the one or more actual ambient by modifying one or more encryption parameters.

8.  The system (1) as in any one of the preceding claims, wherein the detecting apparatus (100) comprises a wireless communication module (103) which is configured to transmit the first signals or the respective second signals to the data elaboration system (300) through a communications network (200, 250) with a pre-assigned transmission priority level.

9.  The system (1) as in any one of the preceding claims, wherein the control system (500, 600) comprises a video control system (500) comprising at least one controllable orientable video camera (505) installed inside the indoor area (4), and an electronic control unit (600) which is configured, upon receiving said alarm signal from the data elaboration system (300), to output a corresponding command signal to the video control system (500) and cause the orientable video camera (505) to localize the position of said person (2) inside the indoor area (4), and then to start recording video evidence of the possible situation of harassment to said person (2).

10.  A method (400) for detecting a possible situation of harassment to people in an indoor area (4), **characterized in**

**that** it comprises at least the following steps:

- (410): detecting at least biometric data relative to at least one person (2) located in the indoor area (4), wherein said step (410) of detecting comprises detecting, by means of a radar sensor (108), biometric data indicative of a respiration rate of said person (2);
- (420): calculating, based on at least the biometric data detected indicative of the respiration rate of said person (2), a parameter indicative of a possible situation of harassment to said person (2);
- (430): generating an alarm signal if the calculated parameter exceeds a predetermined threshold;
- (440): localizing the position of said person (2) inside the indoor area (4); and
- (450): starting video recordal of evidence of the possible situation harassment to said person (2).

11. The method (400) as in claim 10, wherein said step (410) comprises detecting also ambient data indicative of one or more actual ambient conditions of the indoor area (4) and said step (420) comprises calculating said parameter indicative of a possible situation of harassment to said person (2) based also on said ambient data detected.

12. The method (400) as in claim 11, wherein it further comprises the step (415) of dynamically encrypting the biometric data and the ambient data detected.

13. The method (400) as in claim 12, wherein it further comprises the step (417) of transmitting the dynamically encrypted biometric data and the ambient data detected with a pre-assigned priority level.


**Patentansprüche**

1. System (1) zum Erkennen einer möglichen Belästigungssituation von Personen in einem Innenbereich (4), wobei es mindestens Folgendes umfasst:

- ein Datenerarbeitungssystem (300);
- ein Erfassungsgerät (100), das konfiguriert ist, um zumindest biometrische Daten in Bezug auf zumindest eine Person (2) zu erfassen, die sich in dem Innenbereich (4) befindet, wobei das Erfassungsgerät (100) zumindest einen Radarsensor (108) umfasst, der konfiguriert ist, um biometrische Daten zu erfassen, die indikativ für eine Atemfrequenz der Person (2) sind, und dann entsprechende erste Signale, die die biometrischen Daten enthalten, die indikativ für eine Atemfrequenz der Person (2) sind, an das Datenerarbeitungssystem (300) zu senden; wobei
- das Datenerarbeitungssystem (300) konfiguriert ist, um basierend auf mindestens den von dem Radarsensor (108) empfangenen biometrischen Daten, die indikativ für eine Atemfrequenz der Person (2) sind, einen Parameter zu berechnen, der indikativ für eine mögliche Belästigungssituation für die Person (2) ist, und ein Alarmsignal zu erzeugen, wenn der berechnete Parameter einen vorbestimmten Schwellenwert überschreitet;
- ein Steuersystem (500, 600), das konfiguriert ist, um bei Empfangen des Alarmsignals zunächst die Position der Person (2) innerhalb des Innenbereichs (4) zu lokalisieren und dann mit einem Aufzeichnen von Videobeweisen der möglichen Belästigungssituation der Person (2) zu beginnen.

2. System (1) nach Anspruch 1, wobei das Erfassungsgerät (100) konfiguriert ist, um auch Umgebungsdaten zu erfassen, die indikativ für eine oder mehrere aktuelle Umgebungsbedingungen des Innenbereichs (4) sind.

3. System (1) nach Anspruch 2, wobei das Datenerarbeitungssystem (300) ein neuronalbasiertes Modul (302) umfasst, das konfiguriert ist, um den Parameter, der indikativ für eine mögliche Belästigungssituation für die Person (2) ist, basierend auf den biometrischen Daten bezüglich der Person (2) und den von dem Erfassungsgerät (100) empfangenen Umgebungsdaten zu berechnen.

4. System (1) nach Anspruch 1, wobei das Erfassungsgerät (100) eine oder mehrere Umgebungsdaten-Erfassungsvorrichtungen (109, 110, 111, 114) umfasst, die konfiguriert sind, um die jeweiligen Umgebungsdaten erfassen, die ausgewählt sind aus der Gruppe, umfassend Daten, die indikativ für den aktuellen Druck, die aktuelle Temperatur, die aktuelle Feuchtigkeit und das aktuelle Licht innerhalb des Innenbereichs (4) sind, und dann jedes entsprechende zweite Signal, das die jeweiligen erfassten aktuellen Umgebungsdaten enthält, an das Datenerarbeitungssystem (300) zu senden.

5. System (100) nach Anspruch 4, wobei das Erfassungsgerät (100) ein Datenverschlüsselungsmodul (104) umfasst, das konfiguriert ist, um dynamisch mindestens einen Teil der aktuellen biometrischen Daten und/oder der einen oder mehreren aktuellen Umgebungsdaten zu verschlüsseln, die über die ersten Signale oder die jeweiligen zweiten Signale an das Datenerarbeitungssystem (300) gesendet werden.

**6.** System (1) nach einem der vorherigen Ansprüche, wobei das Erfassungsgerät (100) eine nicht-invasive mitnehmbare oder tragbare Vorrichtung (100) umfasst.

**7.** System (1) nach Anspruch 5, wobei das Datenverschlüsselungsmodul (104) konfiguriert ist, um zumindest einen Teil der aktuellen biometrischen Daten und/oder der einen oder mehreren aktuellen Umgebungsdaten dynamisch zu verschlüsseln, indem es einen oder mehrere Verschlüsselungsparameter modifiziert.

**8.** System (1) nach einem der vorherigen Ansprüche, wobei das Erfassungsgerät (100) ein drahtloses Kommunikationsmodul (103) umfasst, das konfiguriert ist, um die ersten Signale oder die jeweiligen zweiten Signale über ein Kommunikationsnetzwerk (200, 250) mit einer vorab zugewiesenen Übertragungsprioritätsstufe an das Datenerarbeitungssystem (300) zu senden.

**9.** System (1) nach einem der vorherigen Ansprüche, wobei das Steuersystem (500, 600) ein Videokontrollsystem (500) mit mindestens einer steuerbaren, ausrichtbaren Videokamera (505), die in dem Innenbereich (4) installiert ist, und eine elektronische Steuereinheit (600) umfasst, die konfiguriert ist, um bei Empfangen des Alarmsignals von dem Datenerarbeitungssystem (300), ein entsprechendes Befehlssignal an das Videokontrollsystem (500) auszugeben und die ausrichtbare Videokamera (505) zu veranlassen, die Position der Person (2) innerhalb des Innenbereichs (4) zu lokalisieren und dann mit einem Aufzeichnen von Videobeweisen der möglichen Belästigungssituation der Person (2) zu beginnen.

**10.** Verfahren (400) zum Erkennen einer möglichen Belästigungssituation von Personen in einem Innenbereich (4), **dadurch gekennzeichnet, dass** es mindestens die folgenden Schritte umfasst:

- (410): Erfassen mindestens biometrischer Daten in Bezug auf mindestens eine Person (2), die sich in dem Innenbereich (4) befindet, wobei der Schritt (410) eines Erfassens ein Erfassen biometrischer Daten mittels eines Radarsensors (108) umfasst, die indikativ für eine Atemfrequenz der Person (2) sind;
- (420): Berechnen, basierend auf zumindest den erfassten biometrischen Daten, die indikativ für die Atemfrequenz der Person (2) sind, eines Parameters, der indikativ für eine mögliche Belästigungssituation der Person (2) ist;
- (430): Erzeugen eines Alarmsignals, wenn der berechnete Parameter einen vorgegebenen Schwellenwert überschreitet;
- (440): Lokalisieren der Position der Person (2) innerhalb des Innenbereichs (4); und
- (450): Beginnen der Videoaufzeichnung von Beweisen für die mögliche Belästigungssituation der Person (2).

**11.** Verfahren (400) nach Anspruch 10, wobei der Schritt (410) auch das Erfassen von Umgebungsdaten umfasst, die indikativ für eine oder mehrere aktuelle Umgebungsbedingungen des Innenbereichs (4) sind, und der Schritt (420) ein Berechnen des Parameters umfasst, der indikativ für eine mögliche Belästigungssituation für die Person (2) ist, auch basierend auf den erfassten Umgebungsdaten.

**12.** Verfahren (400) nach Anspruch 11, wobei es ferner den Schritt (415) eines dynamischen Verschlüsselns der biometrischen Daten und der erfassten Umgebungsdaten umfasst.

**13.** Verfahren (400) nach Anspruch 12, wobei es ferner den Schritt (417) eines Sendens der dynamisch verschlüsselten biometrischen Daten und der Umgebungsdaten, die mit einer vorher zugewiesenen Prioritätsstufe erkannt wurden, umfasst.

**Revendications**

**1.** Système (1) de détection d'une possible situation de harcèlement de personnes dans une zone intérieure (4), comprenant au moins :

- un système d'élaboration de données (300) ;
- un appareil de détection (100) configuré pour détecter au moins des données biométriques relatives à au moins une personne (2) située dans la zone intérieure (4), dans lequel ledit appareil de détection (100) comprend au moins un capteur radar (108) configuré pour détecter des données biométriques indiquant un rythme respiratoire de ladite personne (2) et ensuite pour transmettre de premiers signaux correspondants contenant lesdites données biométriques indiquant un rythme respiratoire de ladite personne (2) audit système d'élaboration de données (300) ; dans lequel

- ledit système d'élaboration de données (300) est configuré pour calculer, sur la base d'au moins les données biométriques reçues du capteur radar (108) indiquant un rythme respiratoire de ladite personne (2), un paramètre indiquant une possible situation de harcèlement de ladite personne (2), et pour générer un signal d'alarme si le paramètre calculé dépasse un seuil prédéterminé ;
- un système de contrôle (500, 600) qui est configuré, lors de la réception dudit signal d'alarme, tout d'abord pour localiser la position de ladite personne (2) à l'intérieur de la zone intérieure (4), et ensuite pour commencer à enregistrer une preuve vidéo de la possible situation de harcèlement de ladite personne (2).

2. Système (1) selon la revendication 1, dans lequel ledit appareil de détection (100) est configuré pour détecter également des données ambiantes indiquant une ou plusieurs conditions ambiantes réelles de la zone intérieure (4).

3. Système (1) selon la revendication 2, dans lequel ledit système d'élaboration de données (300) comprend un module neuronal (302) qui est configuré pour calculer ledit paramètre indicatif d'une possible situation de harcèlement de ladite personne (2) sur la base des données biométriques relatives à ladite personne (2) et des données ambiantes reçues de l'appareil de détection (100).

4. Système (1) selon la revendication 1, dans lequel ledit appareil de détection (100) comprend un ou plusieurs dispositifs de détection de données ambiantes (109, 110, 111, 114) qui sont configurés pour détecter chaque donnée ambiante respective sélectionnée dans le groupe comprenant des données indicatives de la pression réelle, de la température réelle, de l'humidité réelle, de la lumière réelle à l'intérieur de la zone intérieure (4), puis pour transmettre au système d'élaboration de données (300) chaque second signal correspondant contenant les données ambiantes réelles respectives détectées.

5. Système (100) selon la revendication 4, dans lequel l'appareil de détection (100) comprend un module de cryptage de données (104) configuré pour crypter dynamiquement au moins une partie d'au moins l'une des données biométriques réelles et des une ou plusieurs données ambiantes réelles transmises par les premiers signaux ou les seconds signaux respectifs au système d'élaboration de données (300).

6. Système (1) selon l'une quelconque des revendications précédentes, dans lequel ledit appareil de détection (100) comprend un dispositif portable ou à porter non invasif (100).

7. Système (1) selon la revendication 5, dans lequel ledit module de cryptage de données (104) est configuré pour crypter dynamiquement ladite au moins une partie de l'au moins une des données biométriques réelles et des une ou plusieurs données ambiantes réelles en modifiant un ou plusieurs paramètres de cryptage.

8. Système (1) selon l'une quelconque des revendications précédentes, dans lequel l'appareil de détection (100) comprend un module de communication sans fil (103) qui est configuré pour transmettre les premiers signaux ou les seconds signaux respectifs au système d'élaboration de données (300) par l'intermédiaire d'un réseau de communication (200, 250) avec un niveau de priorité de transmission préétabli.

9. Système (1) selon l'une quelconque des revendications précédentes, dans lequel le système de contrôle (500, 600) comprend un système de contrôle vidéo (500) comprenant au moins une caméra vidéo orientable contrôlable (505) installée dans la zone intérieure (4), et une unité de contrôle électronique (600) qui est configurée, lors de la réception dudit signal d'alarme du système d'élaboration de données (300), pour envoyer un signal de commande correspondant au système de contrôle vidéo (500) et amener la caméra vidéo orientable (505) à localiser la position de ladite personne (2) dans la zone intérieure (4), puis commencer à enregistrer une preuve vidéo de la possible situation de harcèlement à l'égard de ladite personne (2).

10. Procédé (400) de détection d'une possible situation de harcèlement de personnes dans une zone intérieure (4), **caractérisé en ce qu'**il comprend au moins les étapes suivantes :

- (410) : détection d'au moins des données biométriques relatives à au moins une personne (2) située dans la zone intérieure (4), dans lequel ladite étape (410) de détection comprend la détection, au moyen d'un capteur radar (108), de données biométriques indiquant un rythme respiratoire de ladite personne (2) ;
- (420) : calcul, sur la base d'au moins les données biométriques détectées indiquant le rythme respiratoire de ladite personne (2), d'un paramètre indiquant une possible situation de harcèlement de ladite personne (2) ;
- (430) : génération d'un signal d'alarme si le paramètre calculé dépasse un seuil prédéterminé ;
- (440) : localisation de la position de ladite personne (2) à l'intérieur de la zone intérieure (4) ; et
- (450) : lancement de l'enregistrement vidéo des preuves de la possible situation de harcèlement à l'égard de ladite personne (2).

11. Procédé (400) selon la revendication 10, dans lequel ladite étape (410) consiste à détecter également des données ambiantes indiquant une ou plusieurs conditions ambiantes réelles de la zone intérieure (4) et ladite étape (420) consiste à calculer ledit paramètre indiquant une possible situation de harcèlement de ladite personne (2) sur la base également desdites données ambiantes détectées.

12. Procédé (400) selon la revendication 11, dans lequel il comprend en outre l'étape (415) de cryptage dynamique des données biométriques et des données ambiantes détectées.

13. Procédé (400) selon la revendication 12, dans lequel il comprend en outre l'étape (417) consistant à transmettre les données biométriques cryptées dynamiquement et les données ambiantes détectées avec un niveau de priorité préétabli.

## FIG.1

Onboard Streaming Engine

| Streaming Module (H.264 Stream. MJPEG for Backup stream) | Camera Mouvement Controller | NVR | Train Control Module |
|---|---|---|---|

503  500  502  504  501

Secure Alerting and Session Management Engine

| SIP Alerting End Point | P-CSCF, S-CSCF | Registrar | Operation Command Control GUI |
|---|---|---|---|

$S_{COM}$

604  601  600  503  603

200

IoT-BT to GSM/GSM-R Gwy

100

BT

Detecting apparatus

Physical custom SIP Devices

150

250
LT E/5G/Ethernet

Cloud

Secure Hosted Server (800)

IoT Management Server (900)

$S_{AL}$

302  301

303

False Trigger Detection Engine with GUI

| Medical Data Analytics Engine | Neutral Model for Determinig Stress Co-efficient | Light Weight TPM Authorization Engine for IoT Devices |
|---|---|---|

300

6  505  4  505
100
100
5  2

1

EP 3 920 092 B1

14

400 {

410

415

417

420

430

440

450

# FIG.2

$S_{BIO}$, $S_{AMB}$    100

## Detecting Apparatus

| Sensor Fusion Application Logic Module (101) | Gesture/Tap Sound Detection Module (102) | BLE Module (103) | Feather Weight TPM & Transport Engine (104) |

Real Time Operating System (105)

Memory (106)

Micro Controller (107)

| Optical/Radar based Sensor (108) | Pressure Sensor (109) | Temperature Sensor (110) | Minimum TPM Circuitry (113) |

| Humidity Sensor (111) | Tap Detection/ Microphone Sensor (112) | Light Sensor (114) | Bias Circuit (115) |

Battery (116)

Power Supply (117)

## FIG.3

108a ——→ Generate DataStream
Frames of Size S

108b ——→ Divide Data into
D Blocks

108c ——→ Organize data as Matrix of
S X D blocks representing
the slow and fast axis
respectively

108d ——→ Variance for each of
the S Column
is found

# FIG.4

108e ——→ Store the Range bin
Corresponding to
Maximum
Variance

108f ——→ Check if
Previous
Maximum
Range Bin
Is a Constant ?

NO

YES

108g ——→ Apply Fast Fourier
Transform (FFT)
Along the Maximum
Range Bin Peak gives the
Respiration rate

| Sensor Fusion Applicarion logic (101) | Minimum TPM Circuitry (113) | Feather Weight TPM Transport Engine (104),BT Module(103) | Light Weight TPM Authorization Engine for IoT Devices OR Secure Hosted Server(800) | IoT-BT to GSM/ GSM-R Gwy(200) | IoT Management Server(900) |
|---|---|---|---|---|---|

Get User, Device association

Initialization of TPM

Return User, Device association

Generate Tokens

Update_User,Device association

Update_Ack

Initialization of Device (100)

Create_Control_Connection

Return_Control_Connection_Reference

Encryption offset, Randomization Inputs, MTU identification, Device Specific phase, Block size.

Get Dynamic Parameters (Control_Connection_Reference)

Return_Response

Generate Random Nos, Key

Ack_Dynamic Parametrization (Key, Random, Nos)

Creation of Control Channel Connection Attributes for Provisioning Dynamic Parameters in Device (100)

Data_Ready

CREATE_DATA_CHANNEL_CONNECTION

RETURN_DATA_Channel_Connection_Reference

Apply Dynamic Encryption adjusting Technique

Send_Encrypted_Data (Data_Connection_Reference)

ACK_Data

Creation of Data Channel Connection & send data using Provisioned Dynamic Parameters in Device (100)

Send encryption data using custom MQTT/COAP with appropriate Prioritization in 5G-GSM-R/TETRA

Send_Dynamic_ Encrypted_Data

Ack_Received_ Encrypted_Data

Sending & Reception of Secure Data with a Service Prioritization in 5G-GSM-R/TETRA

## FIG.5

18

**FIG.6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200052418 A